# EUROPÄISCHE PATENTANMELDUNG

(11) **EP 3 229 511 A1**
(43) Veröffentlichungstag der Anmeldung: **11.10.2017**
(21) Anmeldenummer: 17162721.9
(22) Anmeldetag: 24.03.2017
(51) Int. Cl.: H04W 12/04, H04L 29/06, H04W 4/00

(54) **VERFAHREN ZUM GENERIEREN EINES SCHLÜSSELS UND VERFAHREN ZUR SICHEREN KOMMUNIKATION ZWISCHEN EINEM HAUSHALTSGERÄT UND EINEM GERÄT**

(30) Priorität: 06.04.2016 DE 102016106231
(71) Anmelder: Miele & Cie. KG, 33332 Gütersloh (DE)
(72) Erfinder: Langhammer, Nils, 33415 Verl (DE); Köster, Thomas, 33729 Bielefeld (DE); Wöstemeyer, Stefan, 33154 Salzkotten (DE)

(57) **Zusammenfassung**

Die Erfindung betrifft ein Verfahren zum Generieren eines Schlüssels (116) für eine sichere Kommunikation zwischen einem Haushaltsgerät (100) und einem Gerät (102), wobei das Verfahren den Schritt des Bestimmens des Schlüssels (116) unter Verwendung einer dem Haushaltsgerät (100) zugeordneten Identifizierungsinformation (124) und einen Schritt des Aussendens der Identifizierungsinformation (124) über eine Funkschnittstelle (110) des Haushaltsgeräts (100) umfasst.

## Beschreibung

Die Erfindung betrifft ein Verfahren zum Generieren eines Schlüssels für eine sichere Kommunikation zwischen einem Haushaltsgerät und einem Gerät, ein Verfahren zur sicheren Kommunikation zwischen einem Haushaltsgerät und einem Gerät und eine entsprechende Vorrichtung sowie ein eine solche Vorrichtung umfassendes Haushaltsgerät.

Ein Haushaltsgerät kann von einem Kundendienstmitarbeiter unter Verwendung eines Diagnosegeräts diagnostiziert werden.

Der Erfindung stellt sich die Aufgabe, ein verbessertes Verfahren zum Generieren eines Schlüssels für eine sichere Kommunikation zwischen einem Haushaltsgerät und einem Gerät, ein verbessertes Verfahren zur sicheren Kommunikation zwischen einem Haushaltsgerät und einem Gerät, eine entsprechende Vorrichtung sowie ein verbessertes Haushaltsgerät zu schaffen.

Erfindungsgemäß wird diese Aufgabe durch ein Verfahren zum Generieren eines Schlüssels für eine sichere Kommunikation zwischen einem Haushaltsgerät und einem Gerät, ein Verfahren zur sicheren Kommunikation zwischen einem Haushaltsgerät und einem Gerät und eine entsprechende Vorrichtung sowie ein Haushaltsgerät mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass ein Gerät, beispielsweise ein Diagnosegerät, über eine drahtlose Kommunikationsverbindung mit einem Haushaltsgerät gekoppelt werden kann, und die Kommunikationsverbindung zudem über in dem Haushaltsgerät und dem Gerät generierbare Schlüssel abgesichert werden kann.

Ein Verfahren zum Generieren eines Schlüssels für eine sichere Kommunikation zwischen einem Haushaltsgerät und einem Gerät umfasst die folgenden Schritte:
Bestimmen des Schlüssels unter Verwendung einer dem Haushaltsgerät zugeordneten Identifizierungsinformation und eines allgemeinen Schlüssels; und
Aussenden der Identifizierungsinformation über eine Funkschnittstelle des Haushaltsgeräts, um die Identifizierungsinformation von dem Haushaltsgerät an das Gerät zu übertragen.

Bei dem Haushaltsgerät kann es sich beispielsweise um ein Gerät zur Zubereitung oder Kühlung von Speisen, zur Reinigung von Geschirr oder Wäsche oder um einen Staubsauger handeln. Ein solches Haushaltsgerät kann auch im gewerblichen Bereich eingesetzt werden. Die Kommunikation kann über eine geeignete Kommunikationsverbindung, insbesondere über eine drahtlose Kommunikationsverbindung erfolgen. Bei dem Gerät kann es sich um ein mobiles Gerät, beispielsweise ein Diagnosegerät, handeln, das von einem Kundendienstmitarbeiter bedient werden kann, um beispielsweise einen Fehlerspeicher des Haushaltsgeräts auszulesen oder eine Software auf dem Haushaltsgerät zu installieren. Alternativ kann es sich bei dem Gerät um ein weiteres Haushaltsgerät handeln. Bei dem Schlüssel kann es sich um einen kryptografischen Schlüssel handeln, wie er im Zusammenhang mit bekannten Verschlüsselungsverfahren verwendet wird. Bei der Identifizierungsinformation kann es sich um zur eindeutigen Identifizierung des Haushaltsgeräts geeignete Daten handeln. Gemäß einer Ausführungsform kann der Schlüssel ferner unter Verwendung eines allgemeinen Schlüssels bestimmt werden. Bei der Identifizierungsinformation und gegebenenfalls dem allgemeinen Schlüssel kann es sich um in dem Haushaltsgerät gespeicherte oder speicherbare Daten handeln.

Gemäß einer Ausführungsform des Verfahrens kann der Schritt des Bestimmens unter Verwendung einer in dem Haushaltsgerät angeordneten oder anordenbaren Bestimmungseinrichtung durchgeführt werden. Dies ermöglicht es, den Schlüssel autark aufseiten des Haushaltsgeräts zu generieren.

Das Verfahren kann einen Schritt des Einlesens der Identifizierungsinformation und gegebenenfalls des allgemeinen Schlüssels über eine Schnittstelle zu einer Speichereinrichtung zum Speichern der Identifizierungsinformation und gegebenenfalls des allgemeinen Schlüssels umfassen. Dabei kann die Speichereinrichtung eine in dem Haushaltsgerät angeordnete oder anordenbare Speichereinrichtung repräsentieren. Eine solche Speichereinrichtung ermöglicht es, die zur Generierung des Schlüssels erforderlichen Daten beispielsweise bei der Herstellung des Haushaltsgeräts in dem Haushaltsgerät zu hinterlegen.

Beispielsweise kann der Schritt des Einlesens ansprechend auf eine Aktivierung einer Funkschnittstelle des Haushaltsgeräts zur drahtlosen Kommunikation zwischen dem Haushaltsgerät und dem Gerät durchgeführt werden. Die Funkschnittstelle kann beispielsweise von einem Kundendienstmitarbeiter aktiviert werden, der eine sichere Kommunikationsverbindung zwischen dem Haushaltsgerät und dem Gerät aufbauen möchte.

Ferner kann das Verfahren einen Schritt des Bereitstellens der Identifizierungsinformation an die bereits genannte oder eine weitere Funkschnittstelle des Haushaltsgeräts zur Übertragung der Identifizierungsinformation von dem Haushaltsgerät an das Gerät umfassen.

Die an die Funkschnittstelle bereitgestellte Identifizierungsinformation kann unverschlüsselt über die Funkschnittstelle ausgesendet werden und von dem Gerät ebenfalls zur Generierung des Schlüssels verwendet werden. Auf diese Weise können im Haushaltsgerät und im Gerät einander entsprechende Schlüssel generiert werden, die die sichere Kommunikation zwischen Haushaltsgerät und Gerät ermöglichen.

Das Verfahren kann einen Schritt des Aufbauens eines (Soft)-AP eines Infrastruktur-basierten Netzwerks umfassen. Dabei kann die Identifizierungsinformationen ein Teil des Netzwerknamens des Netzwerks sein.

Beispielsweise kann die Identifizierungsinformation als Teil eines Netzwerknamens der Funkschnittstelle unverschlüsselt übertragen werden. Durch eine gegebenenfalls wiederholte Aussendung des Netzwerknamens wird eine Erkennung der Funkschnittstelle durch eine in dem Gerät angeordnete Funkschnittstelle ermöglicht. Die Aussendung des Netzwerknamens ist eine typische Vorgehensweise zum Aufbau eines Funknetzwerkes. Somit kann die Identifizierungsinformation durch die Einbeziehung in den Netzwerknamen ohne zusätzlichen Aufwand ausgesendet werden.

In einem Schritt des Bereitstellens kann der Schlüssel zur Verschlüsselung oder Entschlüsselung von über die Funkschnittstelle zu übertragenden Daten bereitgestellt werden. Somit kann die Kommunikationsverbindung zwischen dem Haushaltsgerät und dem Gerät durch die Verwendung des generierten und bereitgestellten Schlüssels abgesichert werden.

Die Identifizierungsinformation kann eine Seriennummer des Haushaltsgeräts repräsentieren. Dies ist vorteilhaft, da Seriennummern üblicherweise eindeutig sind. Wird zur Generierung des Schlüssels zusätzlich ein allgemeiner Schlüssel verwendet, so kann dieser einen einer Mehrzahl von Haushaltsgeräten zugewiesenen Schlüssel repräsentieren. Der allgemeine Schlüssel kann auch in dem Gerät abgespeichert sein, sodass eine Übertragung des allgemeinen Schlüssels von dem Haushaltsgerät zu dem Gerät nicht erforderlich ist.

Gemäß einer Ausführungsform kann im Schritt des Bestimmens der Schlüssel ferner unter Verwendung eines zufallsgenerierten Parameters bestimmt werden. Der zufallsgenerierte Parameter kann einen unter Verwendung eines Zufallsgenerators oder eines Pseudozufallszahlengenerators generierten Parameter repräsentieren. Der zufallsgenerierten Parameter kann aufseiten des Haushaltsgeräts generiert werden und über die Funkschnittstelle unverschlüsselt an das Gerät übermittelt werden, beispielsweise zusammen mit der Identifizierungsinformation als Teil des bereits genannten Netzwerknamens. Alternativ kann der zufallsgenerierte Parameter aufseiten des Geräts generiert werden und über die Funkschnittstelle unverschlüsselt an das Haushaltsgerät übermittelt werden. Gemäß einer Ausführungsform kann bei jeder erneuten Aktivierung der Funkschnittstelle ein neuer zufallsgenerierter Parameter generiert und zur Bestimmung des Schlüssels verwendet werden. Auf diese Weise kann die Kommunikation zwischen dem Haushaltsgerät und dem Gerät sehr sicher gestaltet werden. Der Parameter kann nur für eine Verbindung gültig sein und danach ungültig werden und in einem nachfolgenden Schritt des Bestimmens neu bestimmt werden. Im Schritt des Aussendens kann der Parameter zusammen mit der Identifizierungsinformation ausgesendet werden.

Gemäß einer Ausführungsform kann im Schritt des Bestimmens ein erster Vorschlüssel unter Verwendung eines kryptographischen Signaturverfahrens aus der Identifizierungsinformation und gegebenenfalls dem allgemeinen Schlüssel ermittelt werden. Bei dem kryptographischen Signaturverfahren kann es sich um ein gebräuchliches Signaturverfahren, beispielsweise unter Verwendung einer Hashfunktion handeln. Solche Signaturverfahren ermöglichen die Generierung sicherer Schlüssel. Wenn der Schlüssel nicht direkt aus dem ersten Vorschlüssel generiert wird oder bereits dem ersten Vorschlüssel entspricht, kann ein zweiter Vorschlüssel unter Verwendung einer Transformationsvorschrift aus dem ersten Vorschlüssel ermittelt werden. Beispielsweise kann die Transformationsvorschrift geeignet sein, um einen in Form von Binärdaten vorliegenden ersten Vorschlüssel in eine ASCII-Zeichenfolge zu transformieren. Vorteilhafterweise kann ein Format des ersten Vorschlüssels durch die Transformationsvorschrift an ein durch die Funkschnittstelle verwendbares Format angepasst werden. Wenn der Schlüssel nicht bereits dem zweiten Vorschlüssel entspricht, kann der Schlüssel beispielsweise unter Verwendung einer Längenanpassungsvorschrift aus dem zweiten Vorschlüssel bestimmt werden. Eine solche Längenanpassungsvorschrift kann verwendet werden, um eine Länge des zweiten Vorschlüssels an eine für den Schlüssel erforderliche Länge anzupassen. Wenn der zweite Vorschlüssel zu kürzen ist, kann eine Kürzungsvorschrift als Längenanpassungsvorschrift verwendet werden, durch die beispielsweise überzählige Stellen des zweiten Vorschlüssels entfernt werden können.

Ein Verfahren zur sicheren Kommunikation zwischen einem Haushaltsgerät und einem Gerät umfasst die folgenden Schritte:
Generieren eines ersten Schlüssels unter Verwendung einer in dem Haushaltsgerät angeordneten ersten Bestimmungseinrichtung unter Durchführung des genannten Verfahrens zum Generieren eines Schlüssels;
Generieren eines dem ersten Schlüssel entsprechenden zweiten Schlüssels unter Verwendung einer in dem Gerät angeordneten zweiten Bestimmungseinrichtung und der über die Funkschnittstelle ausgesendeten Identifizierungsinformation; und
Aufbauen einer sicheren Kommunikationsverbindung zwischen dem Haushaltsgerät und dem Gerät unter Verwendung des ersten Schlüssels und des zweiten Schlüssels.
Vorteilhafterweise können auf diese Weise die Schlüssel aufseiten des Haushaltsgeräts und des Geräts unter Verwendung derselben Identifizierungsinformation generiert werden.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Haushaltsgeräts und eines Geräts;
- Figur 2: ein Ablaufdiagramm eines Verfahrens zum Generieren eines Schlüssels aufseiten eines Haushaltsgeräts;
- Figur 3: ein Ablaufdiagramm eines Verfahrens zum Generieren eines Schlüssels aufseiten eines Geräts;
- Figur 4: ein Ablaufdiagramm eines Verfahrens zum Bestimmen eines Schlüssels; und
- Figur 5: ein Ablaufdiagramm eines Verfahrens zur sicheren Kommunikation zwischen einem Haushaltsgerät und einem Gerät.

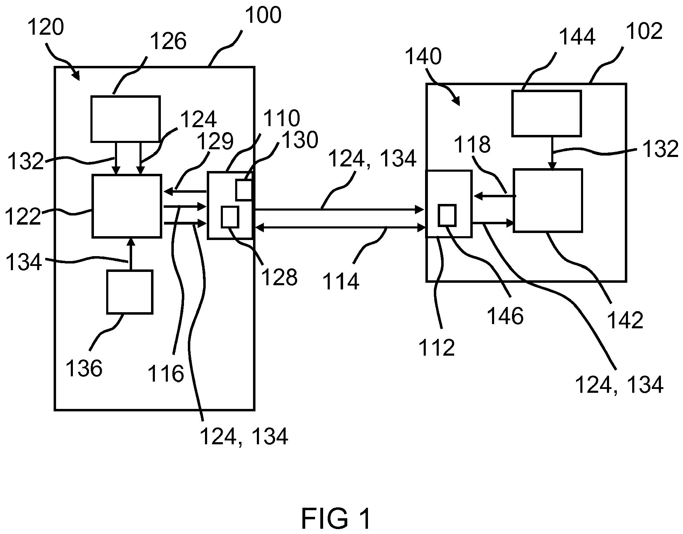

Figur 1 zeigt eine schematische Darstellung eines Haushaltsgeräts 100 und eines Geräts 102 gemäß einem Ausführungsbeispiel. Bei dem Haushaltsgerät 100 handelt es sich um ein vernetzbares Gerät und insbesondere um ein funkvernetzbares Gerät, das im privaten oder gewerblichen Bereich eingesetzt werden kann. Lediglich beispielhaft stellt das Haushaltsgerät 100 einen Kühlschrank mit einem Kühlraum zum Aufbewahren von Lebensmitteln dar. Das Gerät 102 ist gemäß diesem Ausführungsbeispiel als ein Diagnosegerät 102 ausgeführt. Alternativ kann es sich bei dem Gerät 102 um ein anderes mit dem Haushaltsgerät vernetzbares Gerät, beispielsweise auch ein weiteres Haushaltsgerät handeln. Bei dem hier dargestellten Diagnosegerät 102 kann es sich um ein Gerät zur Wartung oder Diagnose handeln, wie es beispielsweise vom Kundendienst zur Wartung von Haushaltsgeräten 100 eingesetzt wird. Das Diagnosegerät 102 stellt gemäß diesem Ausführungsbeispiel ein mobiles Gerät dar, das in einem Abstand zu dem Haushaltsgerät 100 angeordnet ist, der kleiner ist als eine maximale Reichweite einer Funknetzwerkverbindung, über die die Geräte 100, 102 miteinander gekoppelt werden können. Das Diagnosegerät 102 kann als ein PC, Laptop, Tablet, Smartphone oder dergleichen realisiert sein. Die Funknetzwerkverbindung kann auf einem bekannten Standard basieren. Beispielsweise kann es sich um eine WLANbasierte Verbindung handeln.

Um die Geräte 100, 102 datenübertragungsfähig verbinden zu können, weist das Haushaltsgerät 100 eine erste Funkschnittstelle 110 und das Diagnosegerät 102 eine zweite Funkschnittstelle 112 auf. Über die Funkschnittstellen 110, 112 kann eine sichere Kommunikationsverbindung 114, beispielsweise eine bidirektionale Verbindung, zur drahtlosen Datenübertragung zwischen dem Haushaltsgerät 100 und dem Diagnosegerät 102 aufgebaut werden. Unter einer Funkschnittstelle 110, 112 kann beispielsweise ein Funkmodul verstanden werden. Die sichere Kommunikationsverbindung 114 wird durch ein Verschlüsselungsverfahren gesichert, das einen ersten Schlüssel 116 und einen dem ersten Schlüssel 116 entsprechenden zweiten Schlüssel 118 verwendet. Der erste und der zweite Schlüssel 116, 118 sind gemäß einem Ausführungsbeispiel identisch. Der erste Schlüssel 116 wird gemäß dem hier beschriebenen Ansatz aufseiten des Haushaltsgeräts 100 generiert und der zweite Schlüssel 118 aufseiten des Diagnosegeräts 102. Die sichere Kommunikationsverbindung 114 wird dadurch gesichert, das über die erste Funkschnittstelle 110 ausgesendete Daten unter Verwendung des ersten Schlüssels 116 verschlüsselt werden, über die zweite Funkschnittstelle 112 ausgesendete Daten unter Verwendung des zweiten Schlüssels 118 verschlüsselt werden, über die erste Funkschnittstelle 110 empfangene Daten unter Verwendung des ersten Schlüssels 116 entschlüsselt werden und über die zweite Funkschnittstelle 112 empfangene Daten unter Verwendung des zweiten Schlüssels 118 entschlüsselt werden.

Zum Generieren des ersten Schlüssels 116 weist das Haushaltsgerät 100 eine erste Vorrichtung 120 zum Generieren des ersten Schlüssels 116 für eine sichere Kommunikation zwischen dem Haushaltsgerät 100 und dem Diagnosegerät 102 auf. Die erste Vorrichtung 120 kann vollständig oder teilweise in ein Steuergerät des Haushaltsgeräts 100 integriert sein oder als eigenständiges Gerät ausgeführt sein, das in das Haushaltsgerät 100 eingebaut ist. Die erste Vorrichtung 120 weist eine erste Bestimmungseinrichtung 122 auf, die ausgebildet ist, um den ersten Schlüssel 116 unter Verwendung einer dem Haushaltsgerät 100 zugeordneten Identifizierungsinformation 124, beispielsweise einer Seriennummer oder einer anderen Zeichenfolge zur Identifizierung des Haushaltsgeräts 100, zu bestimmen. Die Identifizierungsinformation 124 ist in der ersten Bestimmungseinrichtung 122 oder, wie in Figur 1 gezeigt, in einer Speichereinrichtung 126 des Haushaltsgeräts 100 gespeichert.

Um den ersten Schlüssel 116 zu generieren, ist die erste Bestimmungseinrichtung 122 ausgebildet, um die Identifizierungsinformation 124 aus der Speichereinrichtung 126 auszulesen. Die erste Bestimmungseinrichtung 122 ist ausgebildet, um den ersten Schlüssel 116 unter Verwendung einer Schlüsselgenerierungsvorschrift zu generieren, wie sie typischerweise zur Generierung von Schlüsseln verwendet wird. Beispielsweise kann die Schlüsselgenerierungsvorschrift auf einer Hashfunktion basieren. Nach der Bestimmung des ersten Schlüssels 116 wird der erste Schlüssel 116 bereitgestellt, um zur Verschlüsselung und Entschlüsselung von über die sichere Kommunikationsverbindung 114 übertragene Daten verwendet zu werden. Gemäß diesem Ausführungsbeispiel wird der erste Schlüssel 116 an die erste Funkschnittstelle 110 bereitgestellt, die eine Einrichtung 128 zur Verschlüsselung und Entschlüsselung von Daten und eine Antenne zur drahtlosen Datenübermittlung aufweist.

Der Vorgang des Generierens des ersten Schlüssels 116 wird gemäß einem Ausführungsbeispiel durch ein Aktivierungssignal 129 gestartet, das von der Bestimmungseinrichtung 122 empfangen wird. Beispielsweise wird das Aktivierungssignal 129 bei einer Aktivierung der ersten Funkschnittstelle 110 bereitgestellt. Gemäß einem Ausführungsbeispiel wird das Aktivierungssignal 129 bereitgestellt, wenn eine Bedienperson eine Taste 130 des Haushaltsgeräts 100 betätigt.

Gemäß einem Ausführungsbeispiel ist die erste Bestimmungseinrichtung 122 ausgebildet, um den ersten Schlüssel ferner unter Verwendung eines allgemeinen Schlüssels 132 zu bestimmen. Bei dem allgemeinen Schlüssel 132 handelt es sich um einen Schlüssel, der in einer Mehrzahl von Haushaltsgeräten 100 gespeichert sein kann und somit im Unterschied zu der Identifizierungsinformation nicht zur eindeutigen Identifizierung des Haushaltsgeräts 100 geeignet ist. Gemäß diesem Ausführungsbeispiel ist der allgemeine Schlüssel 132 ebenfalls in der Speichereinrichtung 126 gespeichert und die erste Bestimmungseinrichtung 122 ist ausgebildet, um den allgemeinen Schlüssel 132 zusammen mit der Identifizierungsinformation 124 aus der Speichereinrichtung 126 auszulesen und zur Bestimmung des ersten Schlüssels 116 zu verwenden.

Gemäß einem Ausführungsbeispiel ist die erste Bestimmungseinrichtung 122 ausgebildet, um den ersten Schlüssel alternativ oder zusätzlich zu dem allgemeinen Schlüssel 132 unter Verwendung eines zufallsgenerierten Parameters 134 zu generieren. Gemäß einem Ausführungsbeispiel weist die Vorrichtung 120 eine Einrichtung 136 zur zufallsgesteuerten oder pseudozufallsgesteuerten Generierung des zufallsgenerierten Parameters 134 auf. Gemäß einem Ausführungsbeispiel ist die Einrichtung 136 ausgebildet, um für jede erneute Bestimmung eines ersten Schlüssels 116 einen neuen zufallsgenerierten Parameter 134 zu generieren. Beispielsweise kann ansprechend auf die Bereitstellung des Aktivierungssignals ein neuer zufallsgenerierter Parameter 134 generiert werden. Auf diese Weise basiert jeder neu bestimmte erste Schlüssel 116 auf einer zufallsgesteuerten Komponente.

Zum Generieren des zweiten Schlüssels 118 weist das Diagnosegerät 102 eine zweite Vorrichtung 140 zum Generieren des zweiten Schlüssels 118 für die sichere Kommunikation zwischen dem Haushaltsgerät 100 und dem Diagnosegerät 102 auf. Die zweite Vorrichtung 140 weist eine zweite Bestimmungseinrichtung 142 auf, die ausgebildet ist, um den zweiten Schlüssel 118 unter Verwendung der dem Haushaltsgerät 100 zugeordneten Identifizierungsinformation 124 zu bestimmen. Die Identifizierungsinformation 124 ist gemäß einem Ausführungsbeispiel nicht in dem Diagnosegerät 102 hinterlegt, sondern wird von dem Haushaltsgerät 100 ausgesendet und von dem Diagnosegerät 102 empfangen. Dazu ist die erste Funkschnittstelle 110 des Haushaltsgeräts 100 ausgebildet, um die Identifizierungsinformation 124 auszusenden und die zweite Funkschnittstelle 112 des Diagnosegeräts 102 ist ausgebildet, um die Identifizierungsinformation 124 zu empfangen und an die zweite Bestimmungseinrichtung 142 bereitzustellen. Die erste Funkschnittstelle 102 ist beispielsweise ausgebildet, um die Identifizierungsinformation 124 von der ersten Bestimmungseinrichtung 122 zu empfangen oder aus der Speichereinrichtung 126 auszulesen. Gemäß einem Ausführungsbeispiel ist die erste Funkschnittstelle 110 ausgebildet, um die Identifizierungsinformation als Teil eines von der ersten Funkschnittstelle verwendeten Netzwerknamens auszusenden. Der Netzwerkname kann dabei unverschlüsselt ausgesendet werden. Beispielsweise kann die erste Funkschnittstelle 110 als Router oder Access-Point und die zweite Funkschnittstelle 112 als Client aufgefasst werden.

Die zweite Bestimmungseinrichtung 142 ist ausgebildet, um den zweiten Schlüssel 118 auf dieselbe Weise, beispielsweise unter Verwendung derselben Schlüsselgenerierungsvorschrift, zu bestimmen, wie die erste Bestimmungseinrichtung 122 den ersten Schlüssel 116 bestimmt.

Wenn der erste Schlüssel 116 unter Verwendung des zufallsgenerierten Parameters 134 bestimmt wird, so wird der zufallsgenerierte Parameter 134 ebenfalls, beispielsweise zusammen mit der Identifizierungsinformation 124, von der ersten Funkschnittstelle 110 an die zweite Funkschnittstelle 112 übertragen und an die zweite Bestimmungseinrichtung 142 bereitgestellt. Der zufallsgenerierte Parameter 134 kann ebenfalls als Teil des Netzwerknamens ausgesendet werden.

Wenn der erste Schlüssel 116 unter Verwendung des allgemeinen Schlüssels 132 bestimmt wird, so wird der zweite Schlüssel 118 ebenfalls unter Verwendung des allgemeinen Schlüssels 132 bestimmt. Gemäß einem Ausführungsbeispiel ist der allgemeine Schlüssel 132 in einer Speichereinrichtung 144 des Diagnosegeräts 102 gespeichert und die zweite Bestimmungseinrichtung 142 ist ausgebildet, um den allgemeinen Schlüssel 132 aus der Speichereinrichtung 144 auszulesen und zur Bestimmung des zweiten Schlüssels 118 zu verwenden.

Nach der Bestimmung des zweiten Schlüssels 118 wird der zweite Schlüssel 118 bereitgestellt, um zur Verschlüsselung und Entschlüsselung von über die sichere Kommunikationsverbindung 114 übertragenen Daten verwendet zu werden. Gemäß diesem Ausführungsbeispiel wird der der zweite Schlüssel 118 an die zweite Funkschnittstelle 110 bereitgestellt, die eine Einrichtung 146 zur Verschlüsselung und Entschlüsselung von Daten aufweist.

Gemäß einem Ausführungsbeispiel sind die Bestimmungseinrichtungen 122, 142 jeweils ausgebildet, um aus der Identifizierungsinformation 124 und dem allgemeinen Schlüssel 132 zunächst unter Verwendung eines kryptographischen Signaturverfahrens einen ersten Vorschlüssel zu ermitteln, anschließend aus dem ersten Vorschlüssel unter Verwendung einer Transformationsvorschrift einen zweiten Vorschlüssel zu ermitteln und anschließend die Schlüssel 116, 118 je unter Verwendung einer Kürzungsvorschrift aus dem zweiten Vorschlüssel zu bestimmen.

Nach der Generierung der Schlüssel 116, 118 aufseiten des Haushaltsgeräts 100 und des Diagnosegeräts 102 werden die Schlüssel 116, 118 zum Betrieb der der sicheren Kommunikationsverbindung 114 zwischen dem Haushaltsgerät 100 und dem Diagnosegerät 102 verwendet.

Gemäß einem Ausführungsbeispiel kann das Haushaltsgerät 100 durch den Kundendienst vor Ort ferner über eine optische Schnittstelle diagnostiziert werden. Die Kommunikation über die optische Schnittstelle findet unverschlüsselt statt, da durch die Charakteristik der optischen Übertragung ein "Zuhören" Dritter nicht möglich ist. Hierzu baut der Kundendienst vor Ort mit Hilfe eines Geräts 102, beispielsweise in Form eines PCs, eine Punkt-zu-Punkt Verbindung zu dem Gerät 100 auf.

Der hier beschriebene Ansatz ermöglicht es dem Kundendienst, das Gerät 100 über eine Funkverbindung 114 zu diagnostizieren. Auch bei der Funkverbindung 114 besteht die Anforderung, dass Dritte diese Kommunikation nicht "Mithören" können. Dies ist beispielsweise sinnvoll, um Know-How zu schützen, das nicht an die Öffentlichkeit gelangen soll. Analog zu der optischen Übertragung wird auch für die funkbasierte Lösung eine Punkt-zu-Punkt-Verbindung erzeugt. Um ein "Zuhören" Dritter zu unterbinden, wird die Funkverbindung 114 mit Hilfe von allgemein verfügbaren kryptographischen Methoden verschlüsselt.

Gemäß einem Ausführungsbeispiel wird dabei sichergestellt, dass nur der Kundendienst des Haushaltsgeräts 100 in der Lage ist, eine verschlüsselte Verbindung 114 zu dem Gerät 100 aufzubauen.

Im Bereich der Absicherung von IP-basierten Diagnoseverbindungen werden entweder gemeinsame Schlüssel für alle Geräte 100, 102 oder aber Zertifikate eingesetzt. Der Einsatz von Zertifikaten ist jedoch sehr komplex und nur sehr aufwändig in den Geräten 100, 102 zu realisieren.

Zur Absicherung eingesetzte Zertifikate bieten nur eine ausreichende Sicherheit, wenn das Gerät 100, 102, das die Validierung des Zertifikats durchführen muss, Zugriff auf eine sogenannte Revocation-List hat. Diese Listen sind über das Internet verfügbar und setzen demzufolge einen entsprechenden Zugang voraus. Dieser Zugang muss parallel zur Punkt-zu-Punkt Funkverbindung 114 realisiert werden, was jedoch bei einer einzelnen Funkschnittstelle 110, 112, die in Form eines einzelnen Funkmoduls realisiert sein kann, nicht bzw. nur sehr aufwändig zu realisieren ist.

Gemäß einem Ausführungsbeispiel wird daher eine symmetrische Signatur basierend auf einem HMAC-Verfahren verwendet.

Dies hat den Vorteil, dass es nicht erforderlich ist, alle Haushaltsgeräte 100 mit eindeutigen Zertifikaten auszustatten, was nur mit sehr hohem Aufwand realisierbar wäre, da entsprechende Produktionsprozesse sicher (im Rahmen von IT-Security) ablaufen müssen.

Erschwerend käme hinzu, wenn manche Produkte bei OEM-Partnern gefertigt werden. Hier wäre ein sicherer (IT-Security) Ablauf nur sehr schwer kontrollierbar.

Gemäß dem hier beschriebenen Ansatz ist gemäß einem Ausführungsbeispiel nur der Kundendienst in der Lage, eine verschlüsselte Verbindung mit dem Gerät 100 aufzubauen. Dies kann über ein gemeinsames Geheimnis (Schlüssel) zwischen dem Gerät und dem Kundendienst realisiert werden.

Die einfachste Lösung ist dabei an alle Geräten 100 den gleichen Schlüssel zu vergeben. Sicherheitstechnisch ist dies jedoch sehr bedenklich, da bei einer Kompromittierung des Schlüssels auf alle Geräte 100 zugegriffen werden könnte. Daher ist es sinnvoll, für jedes Gerät 100 einen eindeutigen Schlüssel zu verwenden. Die Herausforderung besteht nun darin, diesen eindeutigen Schlüssel im Gerät 100 zu hinterlegen. Eine Vergabe während der Produktion ist nur sehr aufwändig zu realisieren. Entsprechende Argumente für Zertifikate gelten an dieser Stelle analog.

Daher wird gemäß dem hier beschriebenen Ansatz mit Hilfe von kryptographischen Verfahren ein eindeutiger Schlüssel 116 für jedes Gerät 100 erzeugt. Das bedeutet im Ergebnis, das jedes Gerät 100 über einen eindeutigen Schlüssel 116 zur Durchführung der funkbasierten Diagnose verfügt.

Die Funktionsweise dieses Ansatzes wird zunächst anhand eines Ausführungsbeispiels allgemein mit Hilfe einer Ablaufsequenz beschrieben. Die im Folgenden genannten Schritte sind dabei zeitlich nacheinander anzuordnen.

Als erstes trifft der Kundendienst vor Ort beim Gerät 100 ein und aktiviert die Funkverbindung des Gerätes 100. Dies kann beispielsweise durch Betätigen der Taste 130 oder durch eine andere geeignete Art und Weise erfolgen.

Daraufhin berechnet das Gerät 100 aus der Identifizierungsinformation 124, die im Folgenden auch als Seriennummer 124 bezeichnet wird und einem zuvor in allen oder zumindest einer Mehrzahl von Geräten 100 hinterlegten allgemeinen Schlüssels 132, der im Folgenden auch als Schlüssel KeyBase 132 bezeichnet wird, einen eindeutigen ersten Schlüssel 116, der im Folgenden auch als Schlüssel KeyDiagnose 116, bezeichnet wird, für die Diagnose.

Das Gerät 100 sendet periodisch unverschlüsselt bestimmte Informationen, beispielsweise seinen allgemeinen Gerätetyp bzw. seinen technischen Typ sowie seine Seriennummer S# 124. Dieses Aussenden kann über die erste Funkschnittstelle 110 erfolgen.

Unter Verwendung des Diagnosegeräts 102, das im Folgenden auch als Kundendienst PC 102 bezeichnet wird, wird eine Suche nach verfügbaren Funkverbindungen durchgeführt und das Gerät 100 und dessen Gerätetyp oder technischer Typ und Seriennummer S# 124 gefunden.

Der Kundendienst PC 102 ist ausgebildet, um basierend auf dem zuvor bekannten Schlüssel KeyBase 132 und der Seriennummer S# 124 den zweiten Schlüssel 118, im Folgenden auch als Schlüssel KeyDiagnose 118 bezeichnet, zum Zugriff auf das Gerät 100 zu berechnen.

Der Kundendienst PC 102 ist ausgebildet, um sich mit dem zuvor berechneten zweiten Schlüssel 118 mit dem Gerät 100 zu verbinden.

Im Folgenden wird der hier beschriebene Ansatz anhand eines Ausführungsbeispiels detailliert beschrieben:
Der Kundendient trifft vor Ort beim Gerät 100 ein und aktiviert die Funkverbindung, hier das WLAN-Modul 110 des Gerätes 100.

Als nächstes berechnet das Gerät 100 aus der Serienummer S# 124 und einem zuvor in den Geräten 100 hinterlegten Schlüssels KeyBase 132 einen eindeutigen Schlüssel 116 für die Diagnose. Hierzu wird gemäß einem Ausführungsbeispiel zunächst ein kryptographisches Signaturverfahren, hier die sogenannte kryptographische Hashfunktion HMAC-SHA256 mit folgendem Parameter verwendet:
KeyTemp := HMAC-SHA256(KeyBase, S#)

Das Ergebnis ist ein byte_array[32], das auch als erster Vorschlüssel bezeichnet wird. Um dieses Feld nun als WLAN-Schlüssel verwenden zu können, wird das Feld in gültige Zeichen transformiert. Dazu wird eine Transformationsvorschrift zum Transformieren des ersten Vorschlüssels eingesetzt. Gemäß diesem Ausführungsbeispiel wird hierzu das temporärere Ergebnis KeyTemp Base64-encodiert. Das Ergebnis ist der temporäre Schlüssel KeyTemp2, der auch als zweiter Vorschlüssel bezeichnet wird.
KeyTemp2 := Base64(KeyTemp)

Dieser Schlüssel wird bei WLAN auf eine maximale Länge von 32 Zeichen gekürzt. Bei Bedarf kann die Schlüssellänge weiter reduziert werden. Dazu wird eine geeignete Kürzungsvorschrift eingesetzt. Gemäß diesem Ausführungsbeispiel wird die Reduktion auf die Länge LKey über die Funktion Trim durchgeführt, die alle nach LKey folgenden Zeichen abschneidet. Das Ergebnis ist der Schlüssel KeyDiagnose 116.
KeyDiagnose := Trim (LKey, KeyTemp2)

Im Folgenden aktiviert das Gerät 100 einen sogenannten Soft-Access-Point (Soft-AP), der einen als Softwarelösung realisierten Zugangspunkt der ersten Funkschnittstelle 110 darstellen kann. Als Funknetzwerkname oder Netzwerkname SSID des Soft-AP verwendet das Gerät gemäß einem Ausführungsbeispiel (wobei das Zufallsfeld optional ist):
SSID := <TechnischerTyp>-<Seriennummer>-<Zufallsfeld>
z.B. SSID := WMV 960-123456789-A0z

Die SSID wird als Beacon periodisch unverschlüsselt versendet. Auf diese Weise wird die zur Generierung des Schlüssels 116 verwendete Identifizierungsinformation 124 in Form der Seriennummer unverschlüsselt als Teil des Netzwerknamens ausgesendet.

Der Schlüssel, der beispielsweise ein Wi-Fi Protected Access bzw. WPA-Schlüssel sein kann, ist der zuvor berechnete KeyDiagnose 116. Somit werden die über die gemäß diesem Ausführungsbeispiel als WLAN-Kommunikationsverbindung 114 übertragenen Daten mit dem ersten Schlüssel 116 in Form des Schlüssels KeyDiagnose 116 verschlüsselt.

Der Kundendienst PC 102 führt eine Suche nach verfügbaren WLAN Netzwerken durch und findet das Gerät 100 und kann dessen Gerätetyp, Technischen Typ und Seriennummer S# 124 aus der SSID ablesen, die von dem Gerät 100 ausgesendet wird.

Der Kundendienst PC 102 berechnet basierend auf einem zuvor bekannten allgemeinen Schlüssel 132, hier dem Schlüssel KeyBase 132, mit dem gleichen Verfahren, wie der erste Schlüssel 116 aufseiten des Geräts 100 berechnet wurde, den zweiten Schlüssel 118, der ebenfalls den Schlüssel KeyDiagnose darstellt, zum Zugriff auf das Gerät 100.

Der Kundendienst PC 102 verbindet sich mit dem berechneten zweiten Schlüssel 118 mit dem Gerät 100.

Dabei sind die kryptographische Funktion HMAC-SHA256 und die Base64 Encodierung nur exemplarisch genannt. Hier können prinzipiell alle kryptographischen Signaturverfahren bzw. sogenannte HMAC-Verfahren verwendet werden.

Die Besonderheit des hier beschriebenen Ansatzes besteht darin, dass der Schlüssel 116 von der Software des Gerätes 100 während des Betriebes einfach berechnet werden kann. So kann bei ansonsten identischer Software ein unterschiedlicher und vorzugsweise eindeutiger Schlüssel 116 pro Gerät 100 erzeugt werden. Grundlage für die Berechnung des eindeutigen Schlüssels 116 ist gemäß diesem Ausführungsbeispiel ein gemeinsamer Schlüssel in Form des allgemeinen Schlüssels 132, der in der Software des Geräts hinterlegt wird und z.B. durch ein Software-Update während des Betriebes ausgetauscht werden kann.

Gemäß einem Ausführungsbeispiel kann durch den kryptographischen Algorithmus für jede Diagnose-Verbindung 114 ein neuer Schlüssel 116 erzeugen werden. Das bedeutet, wenn in dem Netzwerknamen SSID noch ein weiterer zufälliger Parameter 134 untergebracht wird, so wird durch die Anwendung der kryptographischen Hash-Funktion für jeden vom Gerät 100 erzeugten Soft-AP ein neuer Schlüssel 116 generiert.

Damit kann sogar im Nachhinein bei Bekanntwerden des gemeinsamen Schlüssels 116 der vorherige Datenverkehr nicht entschlüsselt werden, da der durch den zufälligen Parameter 134 bewirkte zufällige Anteil nicht bekannt ist.

Gemäß einem Ausführungsbeispiel besteht ein Merkmal des Ansatzes darin, dass die Identifizierungsinformationen 124, auf denen der WLAN-Schlüssel 116, 118 auf beiden Seiten basiert, ausgesendet werden, wenn die Funkschnittstelle 110 aktiviert wurde und/oder dies mittels einer Taste 130 ausgelöst wurde. Dadurch wird es ermöglicht, sich ohne Vorwissen (mit Ausnahme der Rechenvorschrift und ggf. eines zusätzlichen gemeinsamen Geheimnisses) bzw. vorbereitende Schritte mit jedem Gerät 102 zu verbinden, völlig unabhängig von den Identifizierungsinformationen 124, da diese bei Bedarf mitgeteilt werden. Um eine Angreifbarkeit bei Bekanntwerden der Rechenvorschrift zu verhindern, wird gemäß einem Ausführungsbeispiel ein nur einmal gültiger und zufällig erzeugter Parameter (134) berücksichtigt, der zusätzlich bei der Generierung verwendet wird. Auch hier ist es notwendig, diesen Parameter (134) mitzuteilen, damit dies möglich wird.

Gemäß einem Ausführungsbeispiel werden die Informationen 124 nicht lediglich zur Übertragung bereitgestellt, sondern ausgesendet, sobald das Verfahren ausgeführt wird. Optional wird dazu ein (Soft-) AP eines Infrastruktur-basierten Netzwerks aufgebaut, wobei dann die Identifizierungsinformationen 124 Teil des Netzwerknamens sind. Der Zufallsparameter 134 ist nur für eine Verbindung gültig und wird danach ungültig und/oder muss neu erzeugt werden. Der Parameter 134 wird in diesem Fall zusammen mit den Identifizierungsinformationen 134, z.B. als Teil des Netzwerknamens, ausgesendet.

Anhand der folgenden Figuren wird die automatisierte Generierung eindeutiger Schlüssel 116, 118 zur Absicherung von drahtlosen lokalen Punkt-zu-Punkt Verbindungen 114, beispielsweise für die Kundendienstdiagnose, anhand von allgemeinen Ausführungsbeispielen beschrieben.

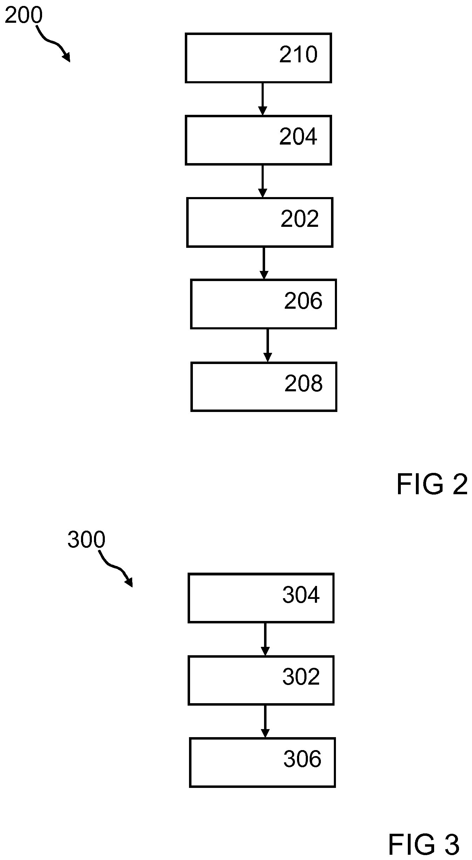

Figur 2 zeigt ein Ablaufdiagramm eines Verfahrens 200 zum Generieren eines ersten Schlüssels aufseiten eines Haushaltsgeräts gemäß einem Ausführungsbeispiel. Das Verfahren 200 kann beispielsweise von Einrichtungen der anhand von Figur 1 beschriebenen Vorrichtung eines Haushaltsgeräts umgesetzt werden.

Das Verfahren 200 umfasst einen Schritt 202 des Bestimmens, in dem der erste Schlüssel unter Verwendung einer dem Haushaltsgerät zugeordneten Identifizierungsinformation und optional einem allgemeinen Schlüssel und zusätzlich oder alternativ einem zufallsgenerierten Parameter bestimmt wird. Sofern die zur Bestimmung des ersten Schlüssels verwendeten Daten nicht bereits zur Verwendung vorliegen, werden sie in einem Schritt 204 eingelesen. Der erste Schlüssel wird nach seiner Bestimmung in einem Schritt 206 zur weiteren Verwendung bereitgestellt. Um parallel oder zeitlich versetzt zu dem ersten Schlüssel einen zweiten Schlüssel aufseiten eines weiteren Geräts, beispielsweise eines Diagnosegeräts, generieren zu können, umfasst das Verfahren 200 einen Schritt 208, in dem zur Bestimmung des zweiten Schlüssels erforderlichen Daten, beispielsweise die Identifizierungsinformation und gegebenenfalls der zufallsgenerierte Parameter, an das weitere Gerät ausgesendet werden. Gemäß einem Ausführungsbeispiel wird das Verfahren 200 gestartet, wenn in einem Schritt 210 eine Funkschnittstelle des Haushaltsgeräts aktiviert wird.

Figur 3 zeigt ein Ablaufdiagramm eines Verfahrens 300 zum Generieren eines zweiten Schlüssels aufseiten eines Geräts gemäß einem Ausführungsbeispiel. Das Verfahren 300 kann beispielsweise von Einrichtungen der anhand von Figur 1 beschriebenen Vorrichtung eines Diagnosegeräts umgesetzt werden.

Das Verfahren 300 umfasst einen Schritt 302 des Bestimmens, in dem der zweite Schlüssel unter Verwendung einer einem Haushaltsgerät zugeordneten Identifizierungsinformation und optional einem allgemeinen Schlüssel und zusätzlich oder alternativ einem zufallsgenerierten Parameter bestimmt wird. Sofern die zur Bestimmung des zweiten Schlüssels verwendeten Daten nicht bereits zur Verwendung vorliegen, werden sie in einem Schritt 304 von dem Haushaltsgerät empfangen, wie beispielsweise die Identifizierungsinformation sowie der zufallsgenerierte Parameter, und/oder aus einer Speichereinrichtung des Geräts eingelesen, wie beispielsweise der allgemeine Schlüssel. Der zweite Schlüssel wird nach seiner Bestimmung in einem optionalen Schritt 306 zur weiteren Verwendung bereitgestellt.

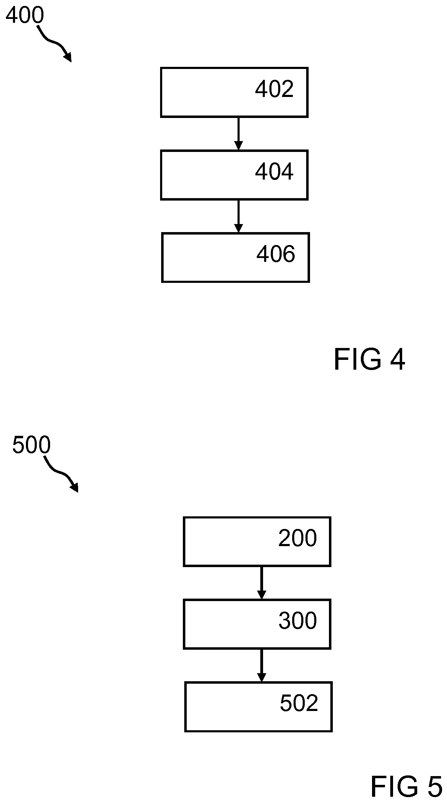

Figur 4 zeigt ein Ablaufdiagramm eines Verfahrens 400 zum Bestimmen eines Schlüssels gemäß einem Ausführungsbeispiel. Das Verfahren 400 umfasst Schritte 402, 404, 406, die bei den anhand der Figuren 2 und 3 beschriebenen Verfahren anstelle der Schritte 202, 302 ausgeführt werden können.

In dem Schritt 402 wird unter Verwendung eines kryptographischen Signaturverfahrens ein Vorschlüssel aus der Identifizierungsinformation und dem allgemeinen Schlüssel ermittelt. In dem Schritt 404 wird unter Verwendung einer Transformationsvorschrift ein zweiter Vorschlüssel aus dem ersten Vorschlüssel ermittelt. In dem Schritt 406 wird der erste bzw. der zweite Schlüssel unter Verwendung einer Kürzungsvorschrift aus dem zweiten Vorschlüssel bestimmt.

Figur 5 zeigt ein Ablaufdiagramm eines Verfahrens 500 zur sicheren Kommunikation zwischen einem Haushaltsgerät und einem Gerät gemäß einem Ausführungsbeispiel. Das Verfahren 500 umfasst die Schritte der Verfahren 200, 300 gemäß denen zunächst ein erster und ein zweiter Schlüssel generiert werden. Die Schritte der Verfahren 200, 300 können dabei zumindest teilweise zeitgleich durchgeführt werden. In einem Schritt 502 wird eine sichere Kommunikationsverbindung zwischen dem Haushaltsgerät und dem Gerät unter Verwendung des ersten Schlüssels und des zweiten Schlüssels aufgebaut und betrieben.

## Patentansprüche

1. Verfahren zum Generieren eines Schlüssels (116) für eine sichere Kommunikation zwischen einem Haushaltsgerät (100) und einem Gerät (102), wobei das Verfahren die folgenden Schritte umfasst:
Bestimmen (202) des Schlüssels (116) unter Verwendung einer dem Haushaltsgerät (100) zugeordneten Identifizierungsinformation (124); und
Aussenden (208) der Identifizierungsinformation (124) über eine Funkschnittstelle (110) des Haushaltsgeräts (100), um die Identifizierungsinformation (124) von dem Haushaltsgerät (100) an das Gerät (102) zu übertragen.

2. Verfahren gemäß Anspruch 1, bei dem der Schritt des Bestimmens (202) unter Verwendung einer in dem Haushaltsgerät (100) angeordneten oder anordenbaren Bestimmungseinrichtung (122) durchgeführt wird.

3. Verfahren gemäß einem der vorangegangenen Ansprüche, mit einem Schritt des Einlesens (204) der Identifizierungsinformation (124) über eine Schnittstelle zu einer Speichereinrichtung (126) zum Speichern der Identifizierungsinformation (124), wobei die Speichereinrichtung (126) eine in dem Haushaltsgerät (100) angeordnete oder anordenbare Speichereinrichtung (126) repräsentiert.

4. Verfahren gemäß Anspruch 3, bei dem der Schritt des Einlesens (204) ansprechend auf eine Aktivierung (210) einer Funkschnittstelle (110) des Haushaltsgeräts (100) zur drahtlosen Kommunikation zwischen dem Haushaltsgerät (100) und dem Gerät (102) durchgeführt wird.

5. Verfahren gemäß einem der vorangegangenen Ansprüche, mit einem Schritt des Aufbauens eines Soft-Accesspoint oder eines Accesspoint eines Infrastruktur-basierten Netzwerks, wobei die Identifizierungsinformationen (124) ein Teil des Netzwerknamens des Netzwerks ist..

6. Verfahren gemäß einem der vorangegangenen Ansprüche, bei dem die Identifizierungsinformation (124) als Teil eines Netzwerknamens der Funkschnittstelle (110) unverschlüsselt übertragen wird.

7. Verfahren gemäß einem der vorangegangenen Ansprüche, bei dem die Identifizierungsinformation (124) eine Seriennummer des Haushaltsgeräts (100) repräsentiert.

8. Verfahren gemäß einem der vorangegangenen Ansprüche, bei dem im Schritt des Bestimmens (202) des Schlüssels (116) der Schlüssel (116) ferner unter Verwendung eines allgemeinen Schlüssels (132) und/oder eines zufallsgenerierten Parameters (134) bestimmt wird, wobei der Parameter (134) nur für eine Verbindung gültig ist und danach ungültig wird und in einem nachfolgenden Schritt des Bestimmens (202; 302) neu bestimmt wird, und bei dem im Schritt des Aussendens (208) der Parameter (134) zusammen mit der Identifizierungsinformation (124) ausgesendet wird..

9. Verfahren gemäß Anspruch 8, bei dem im Schritt des Bestimmens (202) ein erster Vorschlüssel unter Verwendung eines kryptographischen Signaturverfahrens aus der Identifizierungsinformation (124) und dem allgemeinen Schlüssel (132) ermittelt (402) wird, ein zweiter Vorschlüssel unter Verwendung einer Transformationsvorschrift aus dem ersten Vorschlüssel ermittelt (404) wird und der Schlüssel (116) unter Verwendung einer Kürzungsvorschrift aus dem zweiten Vorschlüssel bestimmt (406) wird.

10. Verfahren zur sicheren Kommunikation zwischen einem Haushaltsgerät (100) und einem Gerät (102), wobei das Verfahren die folgenden Schritte umfasst:
Generieren (200) eines ersten Schlüssels (116) unter Verwendung einer in dem Haushaltsgerät (100) angeordneten ersten Bestimmungseinrichtung (122) unter Durchführung eines Verfahrens gemäß einem der vorangegangenen Ansprüche;
Generieren (300) eines dem ersten Schlüssel (116) entsprechenden zweiten Schlüssels (118) unter Verwendung einer in dem Gerät (102) angeordneten zweiten Bestimmungseinrichtung (142) und der über die Funkschnittstelle (110) ausgesendeten Identifizierungsinformation (124); und
Aufbauen (502) einer sicheren Kommunikationsverbindung zwischen dem Haushaltsgerät (100) und dem Gerät (102) unter Verwendung des ersten Schlüssels (116) und des zweiten Schlüssels (118).

11. Vorrichtung (120, 140), die ausgebildet ist, um die Schritte des Verfahrens gemäß einem der vorangegangenen Ansprüche auszuführen.

12. Haushaltsgerät (100) mit einer Vorrichtung (120, 140) gemäß Anspruch 11.

13. Computer-Programmprodukt mit Programmcode zur Durchführung des Verfahrens nach einem der vorangegangenen Ansprüche, wenn das Computer-Programmprodukt auf einer Vorrichtung ausgeführt wird.
